Europäisches Patentamt

European Patent Office

Office européen des brevets

(11) Publication number: **0 081 326**
**B1**

## EUROPEAN PATENT SPECIFICATION

(45) Date of publication of patent specification: 21.05.86

(21) Application number: 82306305.2

(22) Date of filing: 26.11.82

(51) Int. Cl.⁴: **C 09 J 3/00,** C 08 L 33/00,
C 08 L 55/02

(54) Curing compositions.

(30) Priority: 09.12.81 GB 8137146

(43) Date of publication of application:
15.06.83 Bulletin 83/24

(45) Publication of the grant of the patent:
21.05.86 Bulletin 86/21

(84) Designated Contracting States:
AT BE CH DE FR GB IT LI LU NL SE

(56) References cited:
GB-A-1 544 006

(73) Proprietor: **Lingner and Fischer GmbH**
**Postfach 1440**
**D-7580 Buhl (Baden) (DE)**

(72) Inventor: **Hechenberger, Dieter Anton**
**Fran-Lehar-Strasse 7**
**D-6920 Sinsheim 7 (DE)**
Inventor: **Gollub, Hans Juergen**
**Arndtstrasse 14**
**D-7580 Buehl (DE)**

(74) Representative: **Russell, Brian John et al**
**Beecham Products Patents Department**
**St George's Avenue**
**Weybridge Surrey KT13 0DE (GB)**

Courier Press, Leamington Spa, England.

**Description**

The present invention relates to two-component compositions having improved curing properties.

Conventional two-component adhesive compositions generally consist of a binder component comprising monomer and an initiator of polymerisation and a hardener component comprising a polymerisation accelerator. Each component is stable and has a long shelf-life, but when mixed the combined effect of initiator and accelerator is to cause the polymerisation of the monomer. Such adhesive compositions have been successfully used where only a thin film of adhesive is required between the substrates to be joined, but have been unsatisfactory when applied to wide gaps.

GB—A—1544006 describes and claims an adhesive composition comprising a reducing component, which comprises a reducing agent, and an oxidizing component comprising an organic hydroperoxide, the oxidizing component being included in a composition comprising (a) 5 to 30 wt. % of a polymeric component comprising an elastomeric copolymer of butadiene and acrylonitrile or an elastomeric copolymer of butadiene, acrylonitrile and less than 5 wt. % of a functional monomer or a graft copolymer of butadiene and at least one of acrylonitrile, styrene and a methacrylic acid ester; (b) 70 to 95 wt. % of a monomer mixture comprising 30 to 80 wt. % of 2-hydroxy ethyl methacrylate or 2-hydroxy propyl methacrylate and 70 to 20 wt. % of a $C_{1-4}$ alkyl methacrylate, based on the total monomers having ethylenically unsaturated double bonds, and (c) 0.1 to 10 wt. % of the organic hydroperoxide, based on the total monomers having ethylenically unsaturated double bonds, the reducing component being separate from the other components prior to use and being miscible therewith to form a redox system with the oxidizing component.

It has now been found that certain formulations have improved curing properties such that wide gaps may be bridged by adhesive. These formulations are also suitable for use as casting resins and fillers. Moverover the cured adhesive is colourless or only slightly coloured.

Accordingly the present invention provides a two-component composition comprising:—

a binder component comprising:—
a polymerisable vinyl monomer,
an organic acid,
a peroxy polymerisation initiator and a high molecular weight polymer;
and a hardener component comprising:—
a polymerisable vinyl monomer,
a thione polymerisation accelerator, and a high molecular weight polymer; with the proviso that the organic acid is not picric acid.

The two component compositions may be formulated for use as, for instance, an adhesive, filler or casting material. Preferably it is formulated for use as an adhesive.

The polymerisable vinyl monomer may be any vinylic compound capable of polymerisation in the presence of a peroxy initiator and a thione accelerator of polymerisation or a mixture of such vinylic compounds. Preferably the polymerisable vinyl monomer is a mixture comprising a major proportion of a monofunctional vinyl monomer and a minor proportion of a di-, tri- or polyfunctional vinyl monomer.

Suitable vinyl monomers include various acrylate esters, for example: methyl methacrylate, ethyl methacrylate, acrylonitrile, methacrylonitrile, methyl acrylate, ethyl acrylate, butyl methacrylate, cyclorhexyl methacrylate, hexyl methacrylate, 2-ethylhexyl methacrylate, lauryl methacrylate, butyl acrylate, cyclehexyl acrylate, hexyl acrylate, 2-ethylhexyl acrylate, lauryl acrylate, methacrylic acid, acrylic acid, 2-hydroxyethyl acrylate, 2-hydroxyethyl methacrylate, tetrahydrofurfuryl acrylate, tetrahydrofurfuryl methacrylate, glycidyl methacrylate and itaconic acid; ethylene glycol and higher glycol acrylate and methacrylate esters; acrylamide and methacrylamide; halogenated monomers, such as vinylidene chloride, chlorostyrene, 2,3-dichloro-1,3-butadiene and 2-chloro-1,3-butadiene; styrene and mono and polyalkylstyrenes such as methyl styrene, dimethyl styrene, ethyl styrene and t-butyl styrene.

Preferred vinyl monomers include lower alkyl acrylates and lower alkyl methacrylates, and tetrahydrofurfuryl acrylate and tetrahydrofurfuryl methacrylate, 2-hydroxyethyl acrylate and 2-hydroxyethyl methacrylate.

Suitable mixtures of vinyl monomers comprise at least 30% of a monofunctional vinyl monomer, preferably about 60 to 80% of a monofunctional vinyl monomer.

Suitable di-, tri- and polyfunctional vinyl monomers include ethyleneglycol diacrylate, ethyleneglycol dimethacrylate, tetramethyleneglycol diacrylate, di-(pentamethyleneglycol) dimethacrylate, tetraethyleneglycol diacrylate, tetraethyleneglycol di(chloroacrylate), diglycerol diacrylate, diglycerol tetramethacrylate, butyleneglycol dimethacrylate, neopentylglycol diacrylate and trihydromethylpropyl triacrylate.

Preferred di-, tri- and polyfunctional vinyl monomers include ethyleneglycol diacrylate, ethyleneglycol dimethacrylate, 1,3- and 1,4-butanediol methacrylate.

Suitable organic acids include, for example, methacrylic acid, acrylic acid, crotonic acid, maleic acid, itaconic acid, p-toluenesulphonic acid and ascorbic acid.

Preferred organic acids include methacrylic and acrylic acids.

2

Suitable peroxy polymerisation initiators include organic peroxides, hydroperoxides, peresters and peracids, such as cumene hydroperoxide, benzoyl peroxide, acetyl peroxide, t-butylhydroperoxide, lauroylperoxide, methylethyl ketone peroxide, t-butylperbenzoate, di-t-butylperoxide, di-t-butyldiperphthalate and t-butylperacetate.

Preferred peroxy initiators of polymerisation include cumene hydroperoxide.

Suitable thione polymerisation accelerators include thiourea and derivatives thereof such as ethylene thiourea, diphenyl thiourea, trimethyl thiourea, tetramethyl thiourea, and tributyl thiourea·and thioketones such as tetrahydro-3,5-dimethyl-4-H-1,3,5-oxadiazin-4-thione.

Preferred thione polymerisation accelerators include tetramethyl thiourea, tetrahydro-3-5-dimethyl-4-H-1,3,5-oxadiazine-4-thione and tributyl thiourea.

Suitable high molecular weight polymers include, for example, acrylonitrile-butadiene· rubber, polychloroprene rubber acrylonitrile-butadiene-styrene resin and polymethyl methacrylate. These may be used singly or admixed as desired to achieve the required properties of hardness, resilience etc in the cured adhesive. The high molecular weight polymer or mixture of such polymers is conveniently the same in both the binder and hardener components, but this is not essential and the high molecular weight polymer or polymer mixture may be different in the two components.

Suitably the binder component comprises from 50 to 90% W/W, preferably 55 to 65% W/W of the polymerisable vinyl monomer, from 1 to 12% W/W, preferably 5 to 8% W/W of the organic acid, from 0.5 to 10% W/W, preferably 2 to 6% W/W of the peroxy polymerisation initiator and from 5 to 40% W/W, preferably 10 to 25% W/W of the high molecular weight polymer.

Suitably the hardener component comprises from 50 to 80% W/W, of polymerisable vinyl monomer, from 1 to 10% W/W, preferably 60 to 75% W/W, of polymerisable vinyl monomer, from 1 to 10% W/W, preferably 3 to 6% W/W, of the thione polymerisation accelerator and from 5 to 40% W/W, preferably 10 to 25% W/W of the high molecular weight polymer.

Either or both components may additionally comprise non-essential accessory ingredients such as thickeners, pigments, fillers, perfumes and shelf-life stabilisers. A suitable shelf-life stabiliser is hydroquinone.

Advantageously a redox indicator, having EO from above +0.01 to below +0.76 volts and $R_H$ from 13.5 to 28, may be included in either or both components, such indicators display a change from one colour to another, or from coloured to colourless when the admixed components have polymerised to the extent that the composition is no longer workable, thus affording an objective assessment of the processing time of the composition. Suitable indicators include thionine, 2,6-dichloro-N-(4-hydroxyphenyl)-1,4-benzoquinonimine, m-cresolindophenol and thymolindophenol and alkali metal salts, especially the sodium salts thereof. Suitably the, or each component comprises from 0.005 to 0.1% W/W, preferably about 0.01 to 0.02% W/W of such an indicator.

Each component may be produced by conventional methods known in the adhesives art, for instance by mixing with high or low shear mixers or in kneters.

Suitably the binder component is produced by dissolving the high molecular weight polymer in the vinyl monomer. The other ingredients except the initiator are then added and mixed thoroughly. The mixture is cooled to 25°C or below and, finally, the initiator is added and mixed in thoroughly. The product can be filled into conventional containers such as tubes or cans. The same procedure is recommended for producing the hardener component except that the cooling and addition of initiator is, of course, omitted.

In use the two components may be admixed and then applied to one or both substrates to be joined. Alternatively, when both substrates are to be joined one component may be applied to the first substrate; and the other component to the second substrate. The two substrates are then brought into contact and maintained in the necessary relative positions whilst the adhesive cures.

The present invention further provides a process for joining two substrates which process comprises applying a two component composition as hereinbefore defined, to one or both substrates and bringing the substrates into contact.

Suitably the process comprises admixing the two components and applying the mixture to one or both substrates. Alternatively the process comprises applying one component to a first substrate and the other component to a second substrate, then bringing the substrates into contact.

The present invention also provides a process for filling spaces or casting in a mould which comprises admixing the two components of a two component composition as hereinbefore defined and applying the mixture to the space to be filled or packing the mould with the mixture.

The present invention will now be illustrated in the following examples, which are not intended to limit the scope of invention in any way.

## Examples

Two-component adhesives were prepared by conventional methods according to the following table:—

| Component A (Binder) | Ex. 1 | 2 | 3 |
|---|---|---|---|
| Methyl methacrylate | 50,00 | 64,75 | 43,5 |
| Ethyleneglycol dimethacrylate | 3,45 | — | 5,0 |
| Methacrylic acid | 7,76 | 3,00 | 2,0 |
| Cumene hydroperoxide | 6,90 | 3,00 | 3,0 |
| Luperox 101 | — | 4,50 | 7,0 |
| Plexigum M 286* | 30,17 | — | — |
| Degalan LP 87/09 | — | 6,75 | 4,5 |
| Hycar 1072 | — | 7,50 | 7,0 |
| Toyolac 900/110 | — | 8,00 | 5,5 |
| Experimental Resin QM 657 | — | — | 20,0 |
| Wacker HDK V15 | 1,29 | 1,50 | 1,5 |
| 2-Hydroxyethyl methacrylate | 8,00 | — | — |
| Jonol | 0,43 | 1,00 | 1,0 |
| **Component B (Hardener)** | | | |
| Methyl methacrylate | 68,00 | 63,5 | 33,0 |
| 2-Hydroxyethyl methacrylate | 8,00 | — | — |
| Tetrahydrofurfuryl methacrylate | — | 7,5 | 7,0 |
| Ethyleneglycol diethacrylate | — | — | 5,0 |
| N-Vinylpyrrolidone | — | — | 32,0 |
| Tetramethylthiourea | — | 2,5 | — |
| Tetrahydro-3,5-dimethyl-4-*H*-1,3,5-oxadazine-4-thione | 7,00 | — | — |
| Ethylenethiourea | — | — | 1,0 |
| Hycar 1072 | 8,00 | — | — |
| Degalan LP 87/09 | 7,00 | 13,5 | 20, |
| Heyplast AC 3452 | — | 5,0 | — |
| Experimental Resin QM 657 | — | 5,0 | — |
| Jonol | — | 2,0 | 1,0 |
| Wacker HDK V15 | 2,0 | 1,0 | 1,0 |

*Trademark

| | |
|---|---|
| Plexigum M 286 | = Rohm Gmbh (a trade name for an acrylic resin) |
| Jonol | = Shell (2,6-Di-tert.-butyl-4-methylphenol) |
| Wacker HDK V 15 | = Wacker (silicic acid) |
| Hycar 1072 | = Goodrich (acrylonitrile rubber) |
| Degalan LP 87/09 | = Degussa (acrylic resin) |
| Exp. Resin QM 657 | = Rohm & Haas (methacrylicallylic-resin) |
| Toyolac 900/110 | = Nordmann & Raßmann (ABS-resin) |
| Luperox 101 | = Luperox Gmbh (2,5-dimethyl)-2,5-bis-(t-butylperoxy)-hexan) |
| Heyplast AC 3452 | = Goodrich (acrylonitrile rubber) |

4

# 0 081 326

## Claims

1. A two component curing composition comprising

a) a binder component comprising a polymerisable vinyl monomer, an organic acid, a peroxy polymerisation initiator and a high molecular weight polymer, and

b) a hardener component comprising a polymerisable vinyl monomer, a thione polymerisation accelerator and a high molecular weight polymer; with the proviso that the organic acid is not picric acid.

2. A two component adhesive composition as claimed in claim 1.

3. A composition as claimed in claim 1 or claim 2 wherein one or both of the binder and hardener components comprise a mixture of a major proportion of a monofunctional vinyl monomer and a minor proportion of a di-, tri- or polyfunctional vinyl monomer.

4. A composition as claimed in any one of claims 1 to 3 wherein the vinyl monomer is selected from methyl methacrylate, ethyl methacrylate, acrylonitrile, methacrylonitrile, methyl acrylate, ethyl acrylate, butyl methacrylate, cyclohexyl methacrylate, hexyl methacrylate, 2-ethylhexyl methacrylate, lauryl methacrylate, butyl acrylate, cyclohexyl acrylate, hexyl acrylate, 2-ethylhexyl acrylate, lauryl acrylate, methacrylic acid, acrylic acid, 2-hydroxyethyl acrylate, 2-hydroxyethyl methacrylate, tetrahydrofurfuryl acrylate, tetrahydrofurfuryl methacrylate, glycidyl methacrylate and itaconic acid, ethylene glycol, higher glycol acrylate and methacrylate esters, acrylamide, methacrylamide, vinylidene chloride, chlorostyrene, 2,3-dichloro-1,3-butadiene, 2-chloro-1,3-butadiene, methyl styrene, dimethyl styrene, ethyl styrene and t-butyl styrene, ethyleneglycol diacrylate, ethyleneglycol dimethacrylate, tetramethyleneglycol diacrylate, di-(pentamethyleneglycol) dimethacrylate, tetraethyleneglycol diacrylate, tetraethyleneglycol di-(chloroacrylate), diglycerol diacrylate, diglycerol tetramethacrylate, butyleneglycol dimethacrylate, neopentylglycol diacrylate and trihydromethylpropyl triacrylate.

5. A composition as claimed in any one of claims 1 to 4 wherein the organic acid is selected from methacrylic acid, acrylic acid, crotonic acid, maleic acid, itaconic acid, p-toluenesulphonic acid and ascorbic acid.

6. A composition as claimed in any one of claims 1 to 5 wherein the peroxy polymerisation initiator is selected from cumene hydroperoxide, benzoyl peroxide, acetyl peroxide, t-butylhydroperoxide, lauroyl-peroxide, methylethyl ketone peroxide, t-butylperbenzoate, di-t-butylperoxide, di-t-butyldiperphthalate and t-butylperacetate.

7. A composition as claimed in any one of claims 1 to 6 wherein the thione polymerisation accelerator is selected from ethylene thiourea, diphenyl thiourea, trimethyl thiourea, tetramethyl thiourea, and tributyl thiourea and tetrahydro-3,5-dimethyl-4-*H*-1,3,5-oxadiazin-4-thione.

8. A composition as claimed in any one of claims 1 to 7 wherein the high molecular weight polymer is selected from acrylonitrile-butadiene rubber, polychoroprene rubber acrylonitrile-butadiene-styrene resin and polymethyl methacrylate.

9. A composition as claimed in any one of claims 1 to 8 wherein the binder component comprises from 50 to 90% w/w of polymerisable vinyl monomer, from 1 to 12% w/w of the organic acid, from 0.5 to 10% w/w of the peroxy polymerisation initiator and from 5 to 40% w/w of the high molecular weight polymer and the hardener component comprises from 50 to 80% w/w of polymerisable vinyl monomer, from 1 to 10% w/w of the thione polymerisation accelerator and from 5 to 40% w/w of the high molecular weight polymer.

10. A process for producing a composition as claimed in claim 1 which process comprises bringing into association the ingredients of each component.

## Revendications

1. Composition de durcissement à deux composants comprenant:

a) un composant liant comprenant un monomère vinylique polymérisable, un acide organique, un initiateur de polymérisation de type peroxy et un polymère à haut poids moléculaire, et

b) un composant durcisseur comprenant un monomère vinylique polymérisable, un accélérateur de polymérisation de type thione et un polymère à haut poids moléculaire; à condition que l'acide organique ne soit pas l'acide picrique.

2. Composition adhésive à deux composants suivant la revendication 1.

3. Composition suivant la revendication ou la revendication 2, caractérisée en ce que les composants liant et/ou durcisseur comprennent un mélange d'une proportion majeure d'un monomère vinylique monofonctionnel et d'une proportion mineure d'un monomère vinylique di-, tri- ou polyfonctionnel.

4. Composition suivant l'une quelconque des revendications 1 à 3, caractérisée en ce que le monomère vinylique est choisi parmi le méthacrylate de méthyle, le méthacrylate d'éthyle, l'acrylonitrile, le méthacrylonitrile, l'acrylate de méthyle, l'acrylate d'éthyle, le méthacrylate de butyle, le méthacrylate de cyclohexyle, le méthacrylate d'hexyle, le methacrylate de 2-éthylhexyle, le méthacrylate de lauryle, l'acrylate de butyle, l'acrylate de cyclohexyle l'acrylate d'hexyle, l'acrylate de 2-éthylhexyle, l'acrylate de lauryle, l'acide méthacrylique, l'acide acrylique, l'acrylate de 2-hydroxyéthyle, le méthacrylate de 2-hydroxyéthyle, l'acrylate de tétrahydrofurfuryle, le méthacrylate de tétrahydrofurfuryle, le méthacrylate de glycidyle, et l'acide itaconique, l'éthylène glycol, des esters acryliques et méthacryliques de glycol supérieur, l'acrylamide, le méthacrylamide, le chlorure de vinylidène, le chlorostyrène, le 2,3-dichloro-1,3-butadiène, le 2-chloro-1,3-butadiène, le méthylstyrène, le diméthylstyrène, l'éthylstyrène et le t-butylstyrène, le diacrylate d'éthylèneglycol, le diméthacrylate d'éthylèneglycol, le diacrylate de tétraméthylèneglycol, le diméthacrylate de (pentaméthylèneglycol), le diacrylate de tétraéthylèneglycol, le di-chloroacrylate) de tétraéthylèneglycol, le diacrylate de diglycérol, le tétraméthacrylate de diglycirol, le diméthacrylate de butylèneglycol, le diacrylate de néopentylglycol et le triacrylate de trihydrométhylpropyle.

5. Composition suivant l'une quelconque des revendications 1 à 4, caractérisée en ce que l'acide organique est chosi parmi l'acide méthacrylique, l'acide acrylique, l'acide crotonique, l'acide maléique, l'acide itaconique, l'acide p-toluènesulfonique et l'acide ascorbique.

6. Composition suivant l'une quelconque des revendications 1 à 5, caractérisée en ce que l'initiateur de polymérisation de type peroxy est choisi parmi l'hydroxyperoxyde de cumène, le peroxyde de benzoyle, le peroxyde d'acétyle, l'hydroperoxyde de t-butyle, le peroxyde de lauroyle, le peroxyde de méthyléthylcétone, le perbenzoate de t-butyle, le peroxyde de di-t-butyle, le diperphtalate de di-t-butyle et le peracétate de t-butyle.

7. Composition suivant l'une quelconque des revendications 1 à 6, caractérisée en ce que l'accélérateur de polymérisation de type thione est choisi parmi l'éthylène thiourée, la diphényl thiourée, la triméthylthiourée, la tétraméthyl thiourée, la tributyl thiourée et la tétrahydro 3,5-diméthyl-4-*H*-1,3,5-oxadiazin-4-thione.

8. Composition suivant l'une quelconque des revendications 1 à 7, caractérisée en ce que le polymère à haut poids moléculaire est choisi parmi un caoutchouc acrylonitrile-butadiène, un caoutchouc polychloroprène, une résine acrylonitrile-butadiène-styrène et du méthacrylate de polyméthyle.

9. Composition suivant l'une quelconque des revendications 1 à 8, caractérisée en ce que le composant liant comprend de 50 à 90% en poids/poids de monomère vinylique polymérisable, de 1 à 12% en p/p de l'acide organique, de 0,5 à 10% en p/p de l'initiateur de polymérisation de type peroxy et de 5 à 40% en p/p du polymère à haut poids moléculaire, et que le composant durcisseur comprend de 50 à 80% en p/p de monomère vinylique polymérisable, de 1 à 10% en p/p de l'accélérateur de polymérisation de type thione et de 5 à 40% en p/p de polymère à haut poids moléculaire.

10. Procédé de production d'une composition suivant la revendication 1, caractérisé en ce qu'il comprend la mise en association des ingrédients de chaque composant.

## Patentansprüche

1. Eine härtbare Zweikomponentenzusammensetzung umfassend

a) ein Bindemittel, umfassend ein polymerisierbares Vinylmonomer, eine organische Säure, einen Peroxy-Polymerisationsinitiator und ein Polymer mit hohem Molekulargewicht, und

b) einen Härter, umfassend ein polymerisierbares Vinylmonomer, ein Thion-Polymerisationsbeschleunigungsmittel und ein Polymer mit hohem Molekulargewicht; mit der maßgabe, daß die organische Säure keine Pikrinsäure ist.

2. Eine Zweikomponenten-Kleberzusammensetzung wie in Anspruch 1 beansprucht.

3. Eine Zusammensetzung wie in Anspruch 1 oder 2 beansprucht, in welcher sowohl Bindemittel als auch Härter oder nur eines von beiden eine Mischung aus einem größeren Antiel eines monofunktionalen Vinylmonomers und eines kleineren Anteils eines di-, tri- oder polyfunktionalen Vinylmonomers enthält.

4. Eine Zusammensetzung wie in einem der Ansprüche 1 bis 3 beansprucht, in welcher das Vinylmonomer ausgewählt ist aus Methylmethacrylat, Äthylmethacrylat, Acrylnitril, Methacrylnitril, Methylacrylat, Äthylacrylat, Butylmethacrylat, Cyclohexylmethacrylat, Hexylmethacrylat, 2-Äthylhexylmethacrylat, Laurylmethacrylat, Butylacrylat, Cyclohexylacrylat, Hexylacrylat, 2-Äthylhexylacrylat, Laurylacrylat, Methacrylsäure, Acrylsäure, 2-Hydroxyäthylacrylat, 2-Hydroxyäthylmethacrylat, Tetrahydrofurfurylacrylat, Tetrahydrofurfurylmethacrylat, Glycidylmethacrylat und Itaconsäure; Äthylenglykol, höhere Glykolacrylate und Methacrylatester, Acrylamid, Methacrylamid, Vinylidenchlorid, Chlorstyrol, 2,3-Dichlor-1,3-butadien, 2-Chlor-1,3-butadien, Methylstyrol, Dimethylstyrol, Äthylstyrol und t-Butylstyrol, Äthylenglykol-diacrylat, Äthylenglykoldimethacrylat, Tetramethylenglykoldiacrylat, Di-(pentamethylenglykol)dimethacrylat, Tetraäthylenglykoldiacrylat, Tetraäthylenglykoldiacrylat, Tetraäthylenglykoldi(chloracrylat), Diglycerindiacrylat, Diglycerintetramethacrylat, Butylenglykoldimethacrylat, Neopentylglykoldiacrylat und Trihydromethylpropyltriacrylat.

5. Eine Zusammensetzung wie in einem der Ansprüche 1 bis 4 beansprucht, in welcher die organische Säure ausgewählt ist aus Methacrylsäure, Acrylsäure, Crotonsäure, Maleinsäure, Itaconsäure, p-Toluolsulphonsäure und Ascorbinsäure.

6. Eine Zusammensetzung wie in einem der Ansprüche 1 bis 5 beansprucht, in welcher der Peroxy-Polymerisationsinitiator ausgewält ist aus Cumolhydroperoxid, Benzoylperoxid, Acetyl-peroxid, t-Butylhydroperoxid, Lauroylperoxid, Methyläthylketonperoxid, t-Butylperbenzoat, Di-t-butylperoxid, Di-t-butyldiperphthalat und T-butylperacetat.

7. Eine Zusammensetzung wie in einem der Ansprüche 1 bis 6 beansprucht, in welcher das Thionpolymerisationsbeschleunigungsmittel ausgewählt ist aus Äthylenthioharnstoff, Diphenylthioharnstoff, Trimethylthioharnstoff, Tetramethylthioharnstoff, und Tributylthioharnstoff und Tetrahydro-3,5-dimethyl-4-H-1,3,5-oxadiazin-4-thion.

8. Eine Zusammensetzung wie in einem der Ansprüche 1 bis 7 beansprucht, in welcher das Polymer mit hohem Molekulargewicht ausgewählt ist aus Acrylnitril-butadienkautschuk, Polychloroprenkautschuk, Acylnitril-butadien-styrolharz und Polymethylmethacrylat.

9. Eine Zusammensetzung wie in einem der Asprüche 1 bis 8 beansprucht, in welcher das Bindemittel 50 bis 90 Gewichtsprozent eines polymerisierbaren Vinylmonomers, 1 bis 12 Gewichtsprozent der organischen Säure, 0,5 bis 10 Gewichtsprozent des Peroxy-Polymerisationsinitiators und 5 bis 40 Gewichtsprozent des Polymers mit hohem Molekulargewicht und der Härter 50 bis 80 Gewichtsprozent eines polymerisierbaren Vinylmonomers, 1 bis 10 Gewichtsprozent des Thion-Polymerisationsbeschleunigungsmittels und 5 bis 40 Gewichtsprozent des Polymers mit hohem Molekulargewicht umfassen.

10. Ein Verfahren zur Herstellung einer Zusammensetzung wie in Anspruch 1 beansprucht, welches Verfahren das In-Verbindung-Bringen der Bestandteile einer jeden Komponente umfaßt.

7 .